# EUROPEAN PATENT APPLICATION

(11) **EP 1 511 275 A1**
(43) Date of publication of application: **02.03.2005**
(21) Application number: 04020288.9
(22) Date of filing: 26.08.2004
(51) Int. Cl.: H04M 1/02, G06F 1/16, G02F 1/1335

(54) **Display system and electronic equipment having displays on both sides of a chassis**

(30) Priority: 27.08.2003 JP 2003302642
(71) Applicant: NEC CORPORATION, Tokyo (JP)
(72) Inventor: Sato, Masahiko, Tokyo (JP)
(74) Representative: VOSSIUS & PARTNER

(57) **Abstract**

In a mobile telephone, first and second display devices are disposed on a front side and a rear side of a chassis, respectively. A state of a reflection control device of each of the display devices is changed over to a state where the reflection control device has a high reflectivity (mirror mode) or a state where an image is displayed (display mode) depending on presence or absence of application of a voltage to the reflection control device. Each of the display devices includes the reflection control device and a liquid crystal display device. The reflection control device controls transmission and shielding (reflection) of a luminous flux from a light guide plate. A mode of one of the first and second display devices is made the mirror mode, and a mode of the other is made the display mode. That is, since the display device in the mirror mode efficiently reflects an external light and an illumination light, and the resultant reflected light is applied to the display device in the display mode, the visibility is enhanced. Since it is unnecessary to provide a reflection member in the light guide plate between the display devices, the loss of the light transmitted through the first and second display devices becomes less, and hence the power saving can be realized.

## Description

The present invention relates to a display system, and an electronic equipment including the display system. In particular, the present invention relates to a display system having display devices provided on both sides of a chassis in a mobile telephone, for example, and an electronic equipment such as a mobile telephone provided with the display system.

In recent years, for a purpose of increasing an amount of displayable information, upsizing of the display device becomes a recent trend.

In addition, high functionality is further provided to a mobile telephone such as an installed camera. As a result, it has become impossible to cope with such progresses only by the upsizing of the display device. To cope with such progresses, there is proposed a mobile telephone having display devices for displaying thereon images (information) provided on both sides of a chassis, respectively.

Besides, there have been proposed open/close types of mobile telephones which are adapted to open and close a pair of chassis. Those open/close types of mobile telephones are diversified as typified by one that is a folding type using a hinge adapted to be rotated only in one direction, one that is a universal type using a universal hinge adapted to be rotated in two or more directions, and the like.

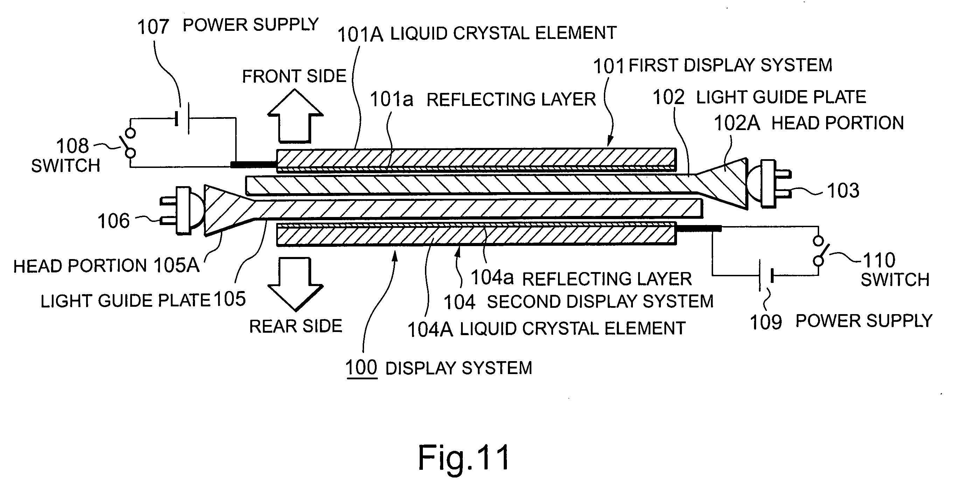

Fig. 11 is a cross sectional view schematically showing a structure of a conventional display system 100 including first and second display systems 101 and 104 provided on both sides of a chassis of a mobile telephone, respectively. Note that the display system 100 shown in Fig. 11 is of a reflection/transmission type capable of corresponding to both of a reflection type for displaying thereon an image by utilizing an external light, and a transmission type for displaying thereon an image by utilizing an illumination light. It should be noted that the display system 100 is not of a type having a mirror mode function for permitting a display screen to be utilized as a mirror surface.

The first and second display systems 101 and 104 include plate-like first and second liquid crystal elements 101A and 104A each of which is structured by laminating a polarizing plate, a color filter and the like, light guide plates 102 and 105 which are disposed on back surface sides (opposite sides of the display surfaces) of the first and second liquid crystal elements 101A and 104A, and light sources 103 and 106 which are disposed so as to face head portions 102A and 105A of the light guide plates 102 and 105, respectively. The light guide plate and the light source constitutes a part of backlight unit.

Each of the first and second liquid crystal elements 101A and 104A is made of so-called semi-transmission type liquid crystal. Thus, reflecting layers 101a and 104a are laminated on the back surfaces of the first and second liquid crystal elements 101A and 104A, respectively. In addition, power supplying circuits including power supplies 107 and 109, and switches 108 and 110 are connected to the first and second display systems 101 and 104, respectively.

A plastic material or glass material as a transparent material is formed into each of the light guide plates 102 and 105. Thus, similarly to each of the first and second liquid crystal elements 101A and 104A, each of the light guide plates 102 and 105 has a plate-like shape. Reflecting films (not shown) for reflecting lights to the outside (a side of the first liquid crystal element 101A or a side of the second liquid crystal element 104A) are disposed on the sides facing to the light guide plates 102 and 105, respectively. In addition, the light sources 103 and 106 are lighting elements such as light emitting diodes (LEDs), and are disposed close to the light guide plates 102 and 105 so as to guide lights emitted from the light sources 103 and 106 to the light guide plates 102 and 105, respectively.

Note that the light sources 103 and 106, and the switches 108 and 110 are connected to a control unit (central processing unit: CPU). Turn-ON/OFF of the light source 103 or 106 is controlled in accordance with a control signal from the control unit, and the switches 108 or 110 is also turned ON/OFF in accordance with a control signal from the control unit.

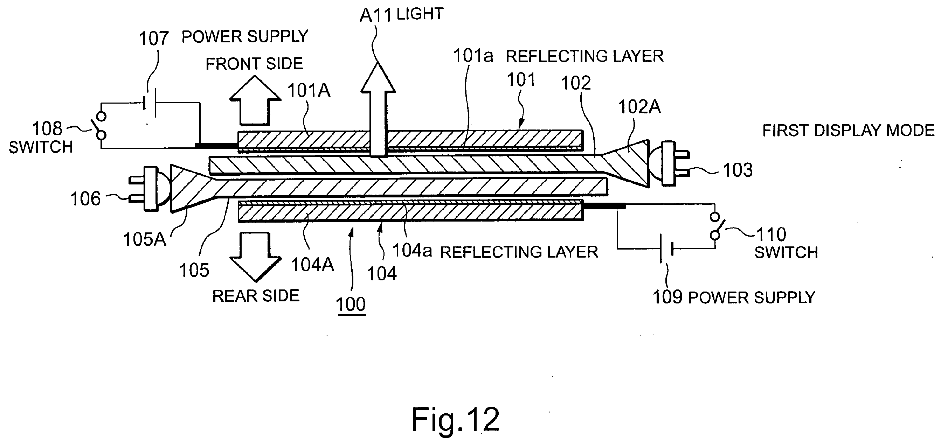

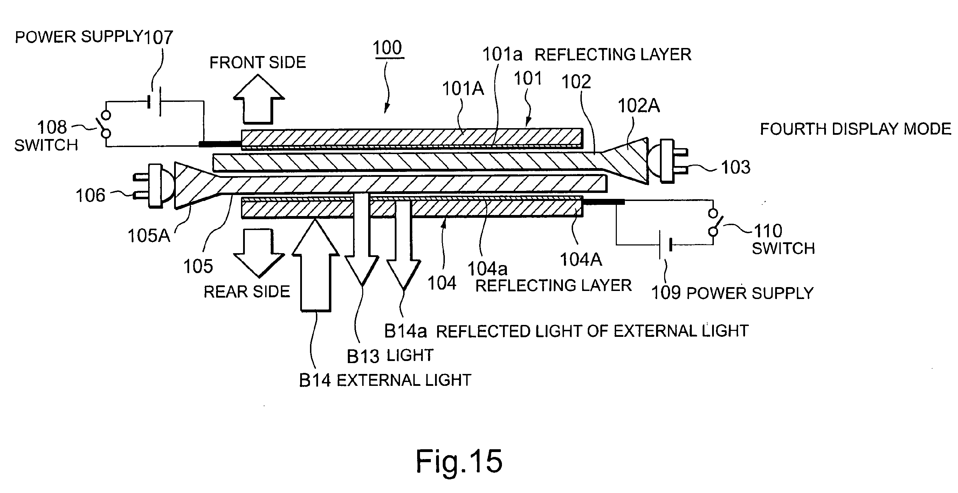

Next, an operation of the conventional display system shown in Fig. 11 will hereinafter be described with reference to Figs. 12 to 15. Figs. 12 to 15 are schematic cross sectional views for explaining the operations of the first and second display systems 101 and 104.

A description will now be given with respect to an operation (first display mode) for displaying information on the first display system 101 by utilizing an illumination light with reference to Fig. 12. In the first display mode, the light source 103 emits a light in accordance with a control signal from the control unit (not shown). The light emitted from the light source 103 is then guided to the light guide plate 102. The light guide plate 102 uniformly scatters the light emitted from the light source 103, and the scattered light is reflected to a front side by the reflecting film (not shown). As a result, a light A11 from the light guide plate 102 is uniformly applied to the first liquid crystal element 101A.

In addition, when the switch 108 is turned ON in accordance with a control signal from the control unit (not shown), the power supplying circuit including the power supply 107 is turned ON so that a voltage is applied to the first liquid crystal element 101A. That is to say, when the first display system 101 becomes a conducting state, suitable voltages are applied to pixels (liquid crystal) based on a predetermined data signal, and also information displayed on the first liquid crystal element 101A is visualized by the light A11 from the light guide plate 102. Note that, in the first display mode, the switch 110 is held turned OFF.

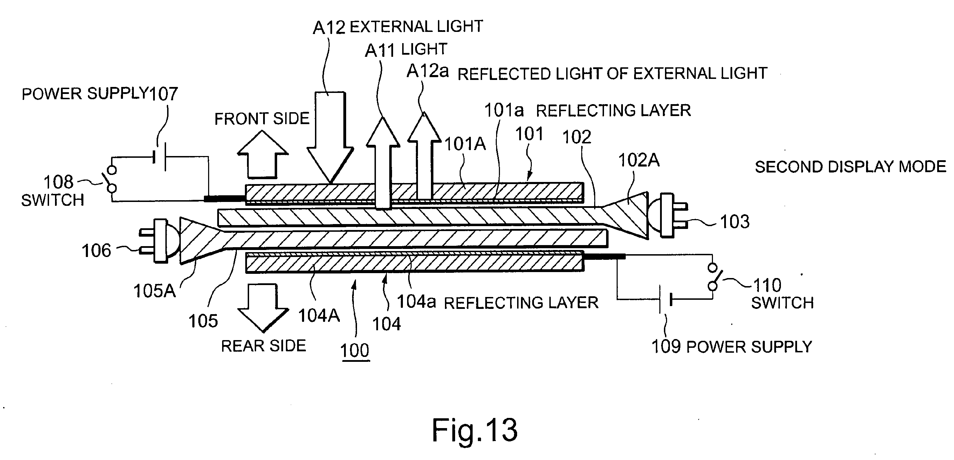

A description will now be given with respect to an operation (second display mode) for displaying information on the first display system 101 by utilizing an external light and an illumination light with reference to Fig. 13. The second display mode, for example, corresponds to an operation of the first display system 101 in a place such as the outdoors in the fine weather where the circumference is bright. That is to say, the second display mode corresponds to a combination of a function based on the external light and a function related to the light emission of the light source 103.

Since when an external light A12 comes into the first light crystal element 101A, the external light A12 is reflected by the reflecting later 101a of the first liquid crystal element 101A, a reflected light A12a of the external light A12 is applied to the first liquid crystal element 101A. Note that since a function related to the light emission of the light source 103 is the same as that in case of the first display mode shown in Fig. 12, description thereof is omitted here for the sake of simplicity.

Then, when the first display system 101 becomes the conducting state, the suitable voltages are applied to the pixels based on a predetermined data signal, and also information displayed on the first liquid crystal element 101A is visualized by the light A11 from the light guide plate 102 and the reflected light A12a of the external light A12.

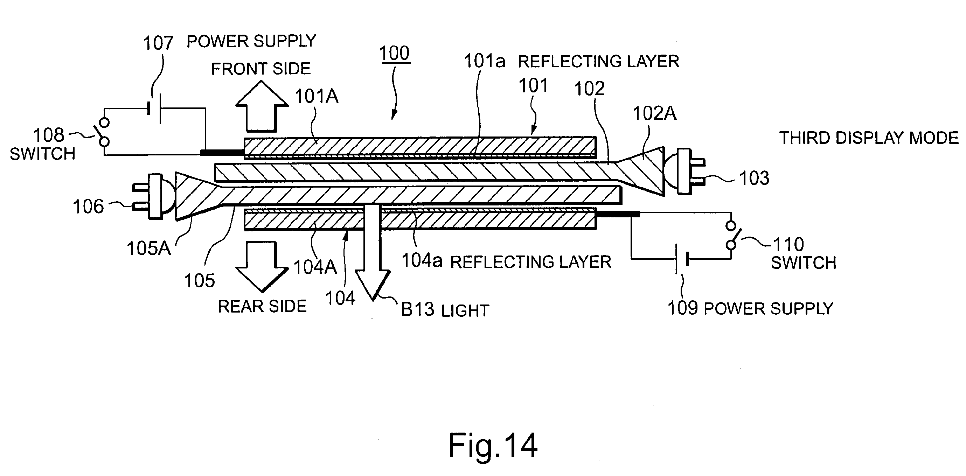

A description will now be given with respect to an operation (third display mode) for displaying information on the second display system 104 by utilizing an illumination light with reference to Fig. 14. In the third display mode, the light source 106 emits a light in accordance with a control signal from the control unit (not shown). The light emitted from the light source 106 is then guided to the light guide plate 105 to be scattered and reflected to the rear side by the reflecting film of the light guide plate 105. As a result, a light B13 from the light guide plate 105 is uniformly applied to the second liquid crystal element 104A.

In addition, when the switch 110 is turned ON in accordance with a control signal from the control unit (not shown), the power supplying circuit including the power supply 109 is turned ON, and suitable voltages are applied to the second liquid crystal element 104A. That is to say, when the second display system 104 becomes the conducting state, the suitable voltages are applied to the pixels based on a predetermined data signal, and also information displayed on the second liquid crystal element 104A is visualized by the light B13 from the light guide plate 105. Note that, in the third display mode, the switch 108 is held turned OFF.

Next, a description will now be given with respect to an operation (fourth display mode) for displaying information on the second display system 104 by utilizing an external light and an illumination light. The fourth display mode, for example, corresponds to an operation of the second display system 104 in a place such as the outdoors in the fine weather where the circumference is bright. That is to say, the fourth display mode corresponds to a combination of a function based on the external light and a function related to the light emission of the light source 106.

Since when an external light B14 comes into the second liquid crystal element 104A, the external light B14 is reflected by the reflecting layer 104a of the second liquid crystal element 104A, a reflected light B14a of the external light B14 is applied to the second liquid crystal element 104A. Note that since a function related to the light emission of the light source 109 is the same as that in case of the third display mode shown in Fig. 14, description thereof is omitted here for the sake of simplicity.

Then, when the second display system 104 becomes the conducting state, the suitable voltages are applied to the pixels based on a predetermined data signal, and also information displayed on the second liquid crystal element 104A is visualized by the light B13 from the light guide plate 105 and the reflected light B14a of the external light B14.

Note that a liquid crystal display device installed in a mobile telephone is disclosed in Japanese Utility Model for Registration No. 3, 094, 091. This liquid crystal display device is a reflection/transmission type liquid crystal display device which is constituted by a light-transmissive panel, a color filter, transparent electrodes, a liquid crystal layer, a deflecting plate, a backlight and the like.

In addition, the liquid crystal display device disclosed in Japanese Utility Model for Registration No. 3,094,091 has a mirror mode function for using a display screen as a mirror surface, and a semitransparent mirror layer is provided between the deflecting plate and the backlight. Then, when the backlight is turned ON, a light emitted from the backlight transmits through the semitransparent mirror to make the image display possible.

On the other hand, when the backlight is turned OFF, a transparent signal is supplied to the transparent electrodes to make the liquid crystal transparent. In this state, the light entered from the front side of the light-transmissive panel passes through the deflecting plate and the liquid crystal to be reflected by the semitransparent mirror layer. All area of the display screen is made to act as a mirror (mirror surface) on the basis of an operation of the reflected light and the light-transmissive panel.

In addition, a reflection/transmission type liquid crystal display device is disclosed in JP 2002-98963 A. This liquid crystal display device has a diffusion layer provided between a liquid crystal display element and a backlight. Due to provision of the diffusion layer, both a reflectivity of a light transmitted through the liquid crystal display element during the reflection display utilizing the external light, and a rate of incidence of a light to the liquid crystal display element during the transmission display utilizing the illumination light are set so as to become high.

Thus, the liquid crystal display device is structured so that the bright display can be obtained in both the transmission display utilizing the light from a light guide plate and the reflection display utilizing the incident light from the outside. Note that in the liquid crystal display device, the light guide plate is disposed so as to face a back surface of the liquid crystal display element, and a reflecting plate is disposed on the back surface of the light guide plate. It should be noted that the liquid crystal display device disclosed in JP 2002-98963 A, unlike the liquid crystal display device disclosed in Japanese Utility Model for Registration No. 3, 094, 091, has no mirror mode function.

In the related art example shown in Fig. 11, in the first and second display systems 101 and 104 which are disposed on the front side and the rear side of the chassis, respectively, the reflecting layers 101a and 104a are provided on the back surfaces of the first and second liquid crystal elements 101A and 104A, respectively. As a result, there is encountered a problem in that the visibility of the displayed information is reduced.

That is to say, in the first and third display modes, since the lights from the light sources 103 and 106 which are guided to the light guide plates 102 and 105 pass through the reflecting layers 101a and 104a of the liquid crystal elements 101A and 104A, respectively, the quantity of light is reduced. Thus, in order to make the quantities of the lights supplied to the first and second liquid crystal elements 101A and 104A equal to or larger than a predetermined value, it is necessary to increase the brightness (luminance) of each of the light sources 103 and 106.

In addition, in the second and fourth display modes, the external lightsA12 and B14 are reflected by the reflecting layers 101a and 104a of the first and second liquid crystal elements 101A and 104A, respectively. Now, if the reflectivity of each of the reflecting layers 101a and 104a is made equal to or larger than a predetermined value, then the losses of the lights from the light sources 103 and 106 increase. Thus, when the visibility of the displayed information is wanted to be prevented from being reduced, it is impossible to set the reflectivity equal to or larger than a predetermined value.

Moreover, in the conventional mobile telephones, there is encountered a problem in that the power consumption increases, and so fourth along with the upsizing, coloring, and plurality of the display device, and the increased luminance of the lighting device. In particular, in the related art example shown in Fig. 11, if the brightness of the light sources 103 and 106 is increased in order to prevent the reduction of the quantities of the lights supplied to the first and second liquid crystal elements 101A and 104A, then the above-mentioned power consumption is forced to be further increases.

In addition, the portable type electronic equipment such as the mobile telephone tends towards the thin and miniaturized one, and hence the miniaturization of the display systems are required. Moreover, in the electronic equipment disclosed in JU 3,094,091 B and JP 2002-98963 A, there is shown an example in which the display device is disposed on only one surface (one side) of the chassis.

The light guide plate disclosed in Japanese Utility Model for Registration No. 3, 094, 091 and JP 2002-98963 A is provided with the reflecting film (reflecting plate) for reflecting the light emitted from the light source to the external side (liquid crystal element side). Consequently, in a case where the display devices are provided on the front side and the rear side of the chassis, respectively, a pair of light guide plates is required. That is to say, in the case where the display devices are provided on the front side and the rear side of the chassis, respectively, even in case of the electronic equipment disclosed in Japanese Utility Model for Registration No. 3, 094, 091 and JP 2002-98963 A as well as even in case of the display device shown in Fig. 11, it is necessary to provide the light guide plates on the front side and the rear side of the chassis, respectively. As a result, it is impossible to realize the thinning and the miniaturization of the display device.

In addition, in the case where the light guide plates are provided on the front side and the rear side of the chassis, respectively, in each of the electronic equipment disclosed in Japanese Utility Model for Registration No. 3,094,091 and JP 2002-98963 A, light sources for supplying lights to the respective light guide plates are also required. As a result, there is encountered a problem in that the structure becomes complicated, and also the power consumption increase.

It is an object of the present invention to provide a display system, and an electronic equipment which are capable of, in a case where display devices are provided on a front side and a rear side of a chassis, respectively, enhancing the visibility of display by utilizing an external light, or enhancing the visibility of display by utilizing a light from a light guide plate.

It is another object of the present invention to realize the thinning and the miniaturization of the display system, and an electronic equipment in a case where the display devices are provided on a front side and a rear side of a chassis, respectively.

It is still another object of the present invention to simplify a structure of light emission means in the display system and to realize the power saving of the light emission means in a case where the display devices are provided on the front side and the rear side of the chassis, respectively.

According to the present invention, there is provided a display system including: a first display device provided on one surface side of the chassis; and a second display device provided so as to face a rear of the first display device, and a reflection control device formed with each of the first and second display devices and changing a state of a high reflectivity depending on presence or absence of a voltage supplied to the reflection control device.

An electronic equipment having a chassis and a display system disposed in the chassis, the display system including: a first display device provided on one surface side of the chassis; and a second display device provided so as to face a rear of the first display device, and a reflection control device formed with each of the first and second display devices and changing a state of a high reflectivity depending on presence or absence of a voltage supplied to the reflection control device.

An electronic equipment including: a first chassis including input means; and a second chassis mounted to the first chassis through open/close means, the electronic equipment further including: a first display device provided on one surface of the second chassis; and a second display device provided so as to face a rear of the first display device, and a reflection control device formed with each of the first and second display devices and changing a state of a high reflectivity depending on presence or absence of a voltage supplied to the reflection control device.

In the display system, and the electronic equipment of the present invention, each of the first and second display devices includes the reflection control device adapted to become a high reflectivity state depending on the presence or absence of application of a voltage to the reflection control device. Hence, a state of the reflection control device of one of the first and second display devices can be changed over to a high reflectivity state (mirror mode), and the state of the reflection control device of the other can be changed over to a state (display mode) in which an image (information) is displayed.

That is to say, in the display system, and the electronic equipment of the present invention, for example, it is unnecessary to provide a reflection member (corresponding to the concept of including the reflecting layer and the like in the related art example shown in Fig. 11 or in Japanese Utility Model for Registration No. 3,094,091 and JP 2002-98963 A) in a single light guide plate disposed between the first and second display devices. As a result, the loss of the light transmitted through the above-mentioned reflection control device becomes less, and hence the power saving can be realized.

In the present invention, when predetermined information is displayed on the display device by utilizing at least one of the external light and the illumination light, the state of the reflection control device of one of the first and second display devices is changed over to the high reflectivity state (mirror mode), and the state of the reflection control device of the other is changed over to a state (display mode) in which an image (information) is displayed. In this case, since the one of the first and second display devices efficiently reflects the external light or the illumination light, and the resultant reflected light is applied to the reflection control device of the other, the visibility is enhanced.

In the present invention, in a case where for example, a single light guide plate (and light source) is provided between the first and second display devices, the light guide plate (and light source) for guiding the light to the first and second display devices is common to the first and second display devices. As a result, it is possible to thin and miniaturize the display system and the electronic equipment.

In addition, in the present invention, with the above-mentioned structure, the light emission means in the display system can be simplified in structure, and also its power saving can be realized.

In the accompanying drawings:
Fig. 1 is a perspective view showing a mobile telephone according to a first embodiment of the present invention;
Fig. 2 is a side elevational view, in which a portion of the mobile telephone shown in Fig. 1 is sectioned;
Fig. 3 is a view of the mobile telephone shown in Fig. 2 when viewed from a direction indicated by an arrow A;
Fig. 4 is a cross sectional view of a liquid crystal display device installed in the mobile telephone shown in Fig. 2;
Fig. 5 is a block diagram schematically showing the display system according to the first embodiment of the present invention;
Fig. 6 is a schematic view showing a state where information is displayed on a first display device using a light source in the display device of Fig. 5;
Fig. 7 is a schematic view showing a state where information is displayed on the first display device using an external light and the light source in the display device of Fig. 5;
Fig. 8 is a schematic view showing a state where information is displayed on a second display device using the light source in the display device of Fig. 5;
Fig. 9 is a schematic view showing a state where information is displayed on the second display device using the external light and the light source in the display device of Fig. 5;
Fig. 10 is a schematic view of a display system according to a second embodiment of the present invention;
Fig. 11 is a schematic cross sectional view of a conventional display system in a mobile telephone;
Fig. 12 is a schematic view showing a state where information is displayed on a first display device using a light source in the conventional display system shown in Fig. 11;
Fig. 13 is a schematic view showing a state where information is displayed on the first display device using an external light and the light source in the conventional display system shown in Fig. 11;
Fig. 14 is a schematic view showing a state where information is displayed on a second display device using a light source in the conventional display system shown in Fig. 11; and
Fig. 15 is a schematic view showing a state where information is displayed on the second display device using the external light and the light source in the conventional display system shown in Fig. 11.

### First Embodiment

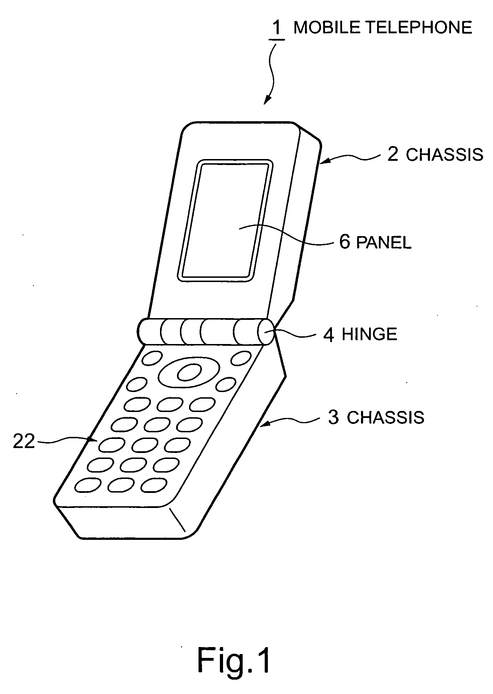

A display system and an electronic equipment such as a mobile telephone according to a first embodiment of the present invention will hereinafter be described in detail with reference to Figs. 1 to 9.

### (Schematic Structure of Mobile Telephone)

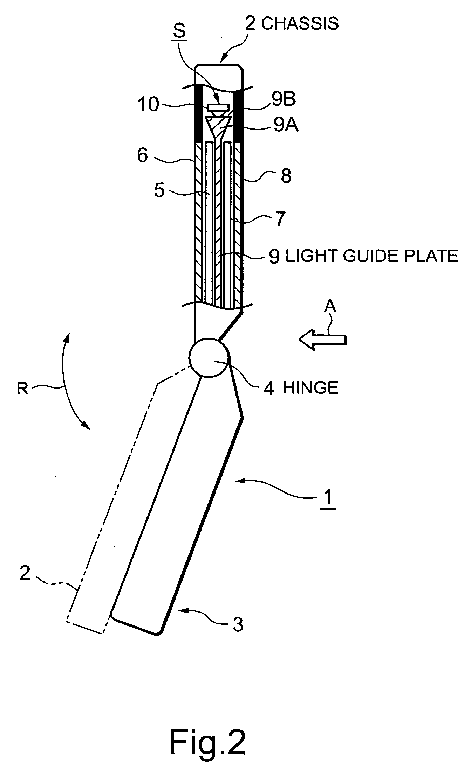

A structure of a folding type mobile telephone 1 will hereinafter be described with reference to Figs. 1 to 3. In this mobile telephone 1, a first chassis 3 is connected to a second chassis 2 through a hinge 4 that is an open/close means. Also, in this mobile telephone 1, as indicated by an arrow R of Fig. 2, the first and second chassis 3 and 2 are adapted to be opened and closed with the hinge 4 as a center.

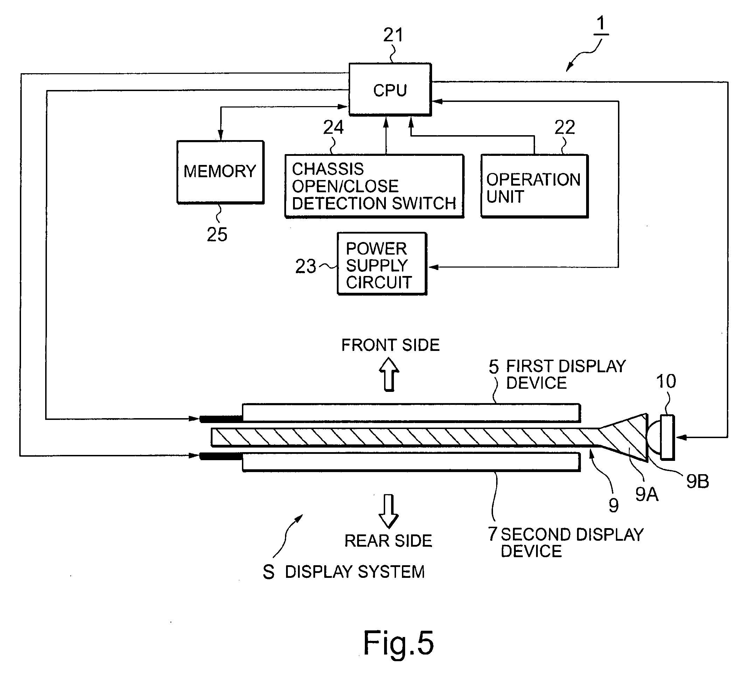

A plurality of operation keys (operation unit) 22 and the like constituting a part of operation means are disposed in the first chassis 3. In addition, a detachable battery (not shown) constituting a part of a power supplying circuit 23 (refer to Fig. 5) is built in the first chassis 3.

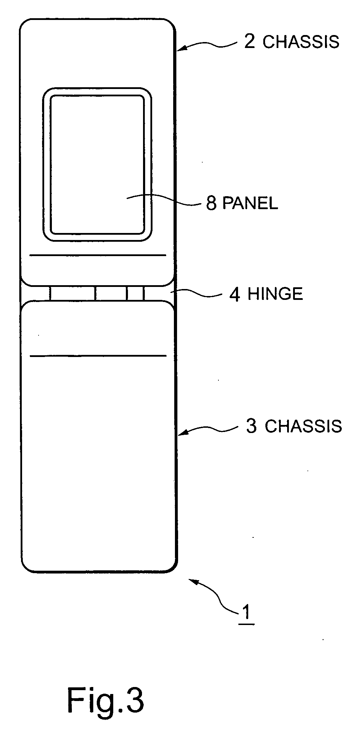

In addition, in the mobile telephone 1, as shown in Figs. 2 and 5, a display system S for carrying out the display or the like of information is disposed in the second chassis 2. That is to say, as shown in Fig. 2, a first panel 6 (refer to Fig. 1) and a second panel 8 (refer to Fig. 3) are disposed on display surfaces on front and rear sides of the second chassis 2, respectively. A first display device 5 (refer to Fig. 2) is disposed so as to face the first panel 6. Also, a second display device 7 (refer to Fig. 2) is disposed so as to face the second panel 8.

The first and second panels 6 and 8A are formed of a transparent material such as a synthetic resin including an acrylate resin, or a glass material and are disposed on the display surfaces on the front and rear sides of the second chassis 2, respectively. The first and second panels 6 and 8 are members for protecting the first and second display devices 5 and 7, respectively. Note that the first display device 5 has nearly the same size as that of the second display device 7, and the first panel 6 has nearly the same size as that of the second panel 8.

As shown in Fig. 2, a single light guide plate 9 is disposed between the first and second display devices 5 and 7. The plate-like light guide plate (optical waveguide) 9 is formed of a transparent material such as a plastic material including an acrylate resin, or a glass material, which has nearly the same size as that of the first and second display devices 5 and 7.

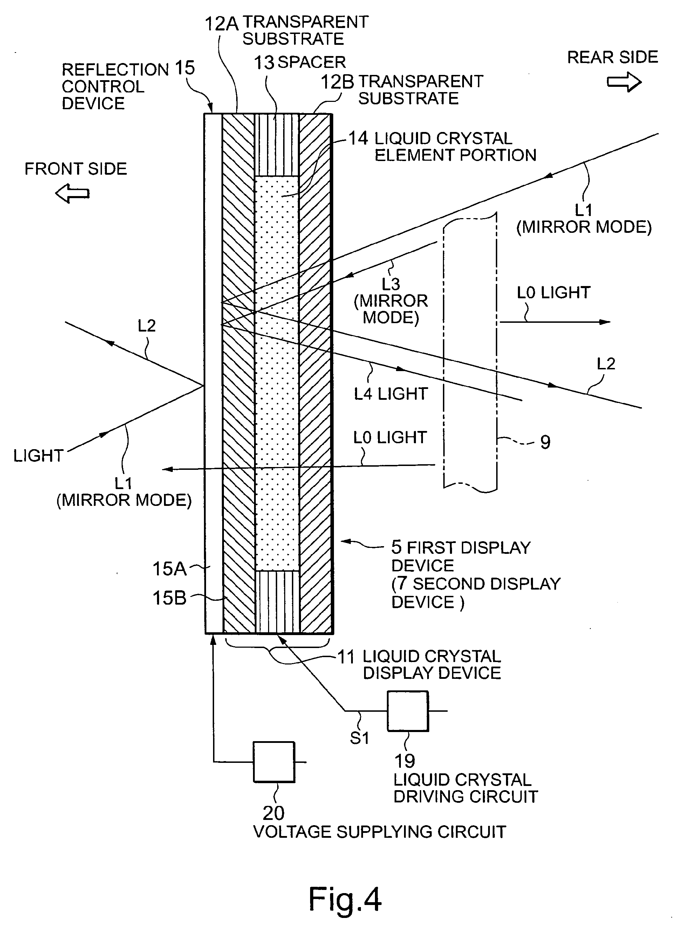

It should be noted that unlike the conventional light guide plate, the reflecting film (including the reflecting layer and the like) for reflecting the light in one direction is not disposed in the light guide plate 9 of this embodiment. As a result, the lights from the light guide plate 9 are emitted to the front side (refer to Fig. 4) and the rear side (refer to Fig. 4) of the second chassis 2, respectively.

In addition, a head portion 9A is formed integrally with an end portion of the light guide plate 9, and thus the head portion 9A is formed so as to have nearly a V shape in cross section. Also, the head portion 9A is formed so as to be thicker than a thickness of the light guide plate 9.

A light source 10 includes lighting elements such as light emitting diodes (LEDs), and is disposed so as to face an incident surface 9B of the head portion 9A. Also, the light source 10 is disposed close to the incident surface 98 of the light guide plate 9 so as to guide the light emitted from the light source 10 to the light guide plate 9.

It should be noted that the light source 10 is an LED array including a plurality of LEDs so as to obtain a uniform lighting quantity over the entire longitudinal length of the incident surface 9B. That is to say, in the LED array, a plurality of LEDs are disposed at predetermined intervals. Note that, the light source 10 and the light guide plate 9 constitute a part of light emission means (backlight unit).

### (Structure of Display Device)

A state of each of the first and second display devices 5 and 7 can be changed over between a state (display mode) where information is displayed and a state (mirror mode) having a high reflectivity depending on the presence or absence of application of a voltage. A structure of each of the first and second display devices 5 and 7 will hereinafter be concretely described with reference to Fig. 4.

Each of the first and second display devices 5 and 7 includes a liquid crystal display device 11 and a reflection control device 15. The liquid crystal display device 11 and the reflection control device 15 are formed integrally with each other with a rear of the reflection control device 15 being tightly stuck to a surface of the liquid crystal display device 11. A liquid crystal driving circuit 19 and a voltage supplying circuit 20 are connected to each of the first and second display devices 5 and 7, respectively.

Note that each of the first and second display devices 5 and 7 shown in Figs. 2, 5 and 6 to 9, unlike the concrete structure of each of the first and second display devices 5 and 7 shown in Fig. 4, is simplified in structure in terms of illustration. In addition, Fig. 4 is a view showing a schematic structure of each of the first and second display devices 5 and 7. As a result, a thickness of each of the first and second display devices 5 and 7 can be arbitrarily thinned.

Moreover, Fig. 4 is a cross sectional view schematically showing the first display device 5 disposed on the front side of the second chassis 2. On the other hand, the second display device 7 disposed on the rear side of the second chassis 2 is symmetrical in structure with respect to the first display device 5 shown in Fig. 4.

The liquid crystal display device 11 is of a type in which a predetermined image is displayed in accordance with a dot matrix method, and includes a pair of transparent substrates 12A and 12B, a spacer 13 and a liquid crystal element portion 14 which are disposed between a pair of transparent substrates 12A and 12B. In addition, a color filter (not shown) is disposed on the front side of the liquid crystal display device 11, and also a pair of polarizing plates (not shown) are disposed so as to face the transparent substrates 12A and 12B, respectively. Note that, each of the transparent electrodes 12A and 12B is formed of a plastic material such as an acrylate resin, or a glass.

The transparent substrates 12A and 12B are disposed through the spacer 13 so that their rears face to each other. That is to say, the spacer 13 is disposed along the vicinities of edge portions of the transparent substrates 12A and 12B so as to define a predetermined gap (corresponding to a thickness of the spacer 13) between the transparent substrates 12A and 12B. A liquid crystal element is enclosed in the gap defined between the transparent substrates 12A and 12B being tightly shut with the spacer 13.

Thus, in the liquid crystal display device 11, the gap portion defined between the transparent substrates 12A and 12B having the liquid crystal element enclosed therein becomes a liquid crystal element portion 14. When a predetermined drive signal S1 is supplied from the liquid crystal driving circuit 19 to electrode portions (not shown) of the liquid crystal element portion 14, a predetermined image is displayed in dot matrix on the liquid crystal element portion 14.

The reflection control device 15 is disposed on an external surface (a display surface on the front side) of the transparent substrate 12A in the liquid crystal device 11. The reflection control device 15 is structured so as to control the transmission and the shielding (reflection) of a luminous flux from the light guide plate 9 (refer to an imaginary line of Fig. 4) shown in Fig. 2. While the description of the detailed structure of the reflection control device 15 is omitted here, the reflection control device 15 includes a liquid crystal element and a mirror.

Then, when a suitable voltage is supplied to the reflection control device 15 through the voltage supplying circuit 20, the reflectivity of the reflection control device 15 becomes high (i.e., a state of the reflection control device 15 becomes a high reflectivity state). That is to say, when a suitable voltage is supplied to the reflection control device 15, the state of the reflection control device 15 is changed from a perfect transmission state over to a perfect shielding state (mirror mode).

Here, a material adapted to reflect the greater part of an external light component L1 in the form of a reflected light component L2 and to transmit the remaining light component is employed to form a mirror (such as a magic mirror) constituting a part of the reflection control device 15. As for the magic mirror, a well-known half mirror or the like can be used.

The half mirror, for example, may be formed by applying a semitransparent material (metal such as chromium) to a transparent substrate formed of an acrylate resin or the like (by utilizing a vacuum evaporation method or a plating method). Note that a structure or the like of the magic mirror can be arbitrarily changed as long as a magic mirror is adapted to reflect the greater part of the external light component L1 in the form of the reflected light component L2 and to transmit the remaining light component.

In order to change the mode of one of the first and second display devices 5 and 7 as shown in Fig. 4 over to the display mode in which an image displayed on the liquid crystal display device 11 can be visually recognized, a drive signal S1 corresponding to a predetermined image signal is supplied to the electrode portions (not shown) of the liquid crystal display device 11 thereof. Upon reception of the drive signal S1, a predetermined image corresponding to the image signal is displayed on the liquid crystal display device 11.

At the same time, in order to change the mode of one of the first and second display devices 5 and 7 over to the display mode, no voltage is applied to the reflection control device 15 of the one display device which is to be in the display mode. In the display mode, a light L0 from the light guide plate 9 (refer to the imaginary line of Fig. 4) shown in Fig. 2 transmits through the liquid crystal display device 11.and the reflection control device 15 (of each of the first and second display devices 5 and 7).

That is to say, since the light (transmitted light component) L0 passed through the first and second display devices 5 and 7 is emitted from the reflection control device 15, the image displayed on the liquid crystal display device 11 becomes able to be visually recognized. In this connection, since the external light component L1 is much lower in intensity than the transmitted light component (light) L0, the reflected light component L2 can be disregarded.

On the other hand, in order to change the mode of the reflection control device 15 over to the mirror mode (corresponding to perfect shielding state), a suitable voltage is applied to the reflection control device 15 through the voltage supplying circuit 20. When the voltage is applied to the reflection control device 15, the external light component (external light) L1 is reflected by the reflection control device 15. That is to say, since the external light L1 is reflected in the form of a reflected light component L2 by the reflection control device 15, the display surface 15A on the front side (and the display surface 15B on the rear side) of the reflection control device 15 acts as a mirror surface.

In addition, in this case, a light L3 from the light guide plate 9, or the external light L1 is reflected by the display surface 15B (mirror surface) of the reflection control device 15 to become a reflected light component L4 or L2, respectively. That is to say, the reflected light component L4 or L2 travels towards the light guide plate 9.

Note that the well-known components or parts related to the liquid crystal element are used in the liquid crystal display device 11 and the reflection control device 15, respectively. In addition to a component or part related to a liquid crystal element which is of a type (such as a twisted nematic (TN) type) adapted to optically modulate a change in double reflection effect due to an electric field using a polarizing plate as described above, a liquid crystal element component or part which is of a type (such as a high polymer dispersion type) adapted to utilize light scattering without using a polarizing plate, or the like can be applied to the liquid crystal display device 11.

In addition, a device which, for example, is adapted to transmit a light when a suitable voltage is applied to the device and to reflect a light when the application of the voltage is released, e.g., a polymer display crystal (PDLC) type device or the like can be applied to the reflection control device 15.

Moreover, each of the first and second display devices 5 and 7 may be arbitrarily changed as long as its operation mode can be changed over to the mirror mode when the light guide plate 9 is lighted like a device having a display surface on which a material having a reflectivity adapted to increase by application of a suitable voltage is provided.

### (Schematic Structure of Display System S)

A structure of the display system S and a configuration of a peripheral circuit of the display system S will hereinafter be simply described with reference to Fig. 5. The mobile telephone 1 includes a CPU 21 as control means, an operation unit 22 constituted by a plurality of operation keys and the like, a power supplying circuit 23, a chassis open/close detection switch 24 for detecting opening and closing of a pair of chassis 2 and 3 (refer to Fig. 1), a memory 25 as storage means, and the display system S including the first and second display devices 5 and 7, the light source 10 and the like.

The CPU 21 manages the overall operation of the mobile telephone 1, and when for example, the operation unit 22 is operated, executes the processing based on this operation. In addition, the CPU 21 carries out the control for changing the mode of one of the first and second display devices 5 and 7 over to the mirror mode or the display mode, and so forth. Note that, the display system S displays thereon various kinds of information in accordance with the control made by the CPU 21.

The memory 25 has a program in accordance with which various kinds of processings are executed, a storage area (including a work area and the like) from and to which various pieces of data are read out and written. The chassis open/close detection switch 24 constitutes a part of open/close detection means, and for example, is a plurality of magnet type switches which are disposed in the form of one set in a pair of chassis 2 and 3, respectively. Note that the liquid crystal driving circuit 19 and the voltage supplying circuit 20 as shown in Fig. 4 are connected between the CPU 21 and each of the first and second display devices 5 and 7.

The power supplying circuit 23, while not illustrated in the figure, is configured (connected) so as to apply voltages to the operation unit 22, the chassis open/close detection switch 24, the memory 25, the liquid crystal driving circuit 19, the voltage supplying circuit 20, the light source 10, the first and second display devices 5 and 7, and the like, respectively, in addition to the CPU 21. That is to say, the power supplying circuit 23 is configured so as to apply the voltages (the drive signal S1 and the like) to the first and second display devices 5 and 7, e.g., the reflection control devices 15 and the liquid crystal element portions 14 shown in Fig. 4.

Here, in Fig. 5, the reason that the illustration of wirings for the power supplying circuit 23, the first and second display devices 5 and 7 and the like is omitted to prevent the complication when a plurality of wirings are distributed among the constituent elements. Note that as shown in Fig. 1, the operation unit 22 includes various kinds of keys such as a power supply key and a ten key used to input characters or the like.

### (Operation of First Embodiment)

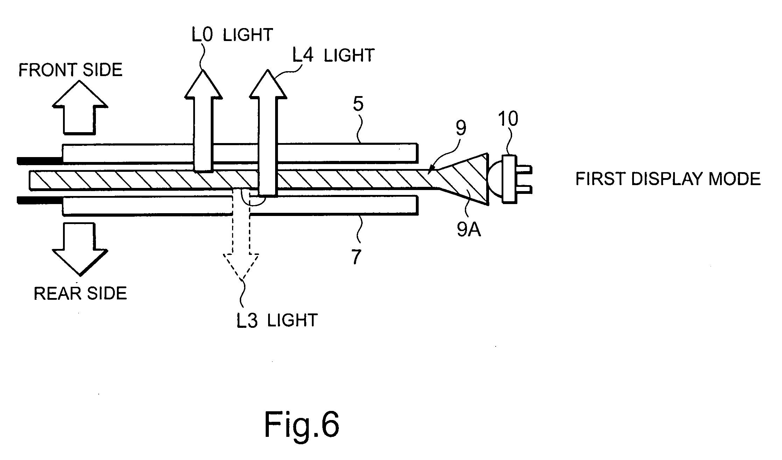

An operation of the display system S shown in Fig. 5 (including the first and second display devices 5 and 7) will hereinafter be described in succession with reference to Figs. 6 to 9. It should be noted that Figs. 6 to 9 each show only a pair of display devices 5 and 7, the light guide plate 9, and the light source 10 as shown in Fig. 5.

First of all, a description will hereinafter be given to an operation (first display mode) in which information is displayed on the first display device 5 (refer to Fig. 2) by utilizing an illumination light with reference to Fig. 6. In the first display mode, firstly, the light source 10 emits a light in accordance with a control signal from the CPU 21 (refer to Fig. 5). The light emitted from the light source 10 is guided to the light guide plate 9, and also a light L0 is emitted from the light guide plate 9 to the front side. Thus, the light L0 from the light guide plate 9 is applied (illuminated) to the first display device 5.

That is to say, as shown in Fig. 4, the reflection control device 15 of the first display device 5 becomes a perfect transparent state when no voltage is applied to the reflection control device 15. As a result, the light L0 from the light guide plate 9 transmits through the liquid crystal display device 11 and the reflection control device 15 of the first display device 5.

In addition, the mode of the second display device 7 is changed over to the mirror mode in accordance with a control signal from the CPU 21. As a result, a light L3 from the light guide plate 9 is reflected by the display surface 15B (refer to Fig. 4) of the reflection control device 15 of the second display device 7. That is to say, since the mode of the reflection control device 15 (refer to Fig. 4) of the second display device 7 is changed over to the mirror mode (by applying a voltage to the reflection control device 15), the light L3 from the light guide plate 9 is reflected in the form of a light (reflected light component) L4 by the display surface 15B of the second display device 7. As a result, the reflected light component L4 travels towards the first display devise 5 (front side).

It should be noted that in this reflection state, the light L3 indicated by an arrow expressed with a broken line in Fig. 6 is reflected in the form of the light L4 indicated by an arrow expressed with a solid line. In addition, the second display device 7 in the mirror mode acts as a mirror since the external light L1 entered from the front side is reflected by the display surface 15A (mirror surface) of the second display device 7 as shown in Fig. 4.

Moreover, when the predetermined drive signal S1 is supplied to the electrode portions (not shown) of the liquid crystal element portion 14 of the liquid crystal display device 11 (shown in Fig. 4) in the first display device 5, a predetermined image is displayed in dot matrix on the first display device 5. That is to say, in this embodiment, an image displayed on the liquid crystal display device 11 can be visually recognized by utilizing the light L0 emitted from the light guide plate 9 and the reflected light component L4 which is obtained by reflecting the light L3 from the light guide plate 9 by the display surface 15B (refer to Fig. 4) of the reflection control device 15. Note that, in the above-mentioned case, it is supposed that the liquid crystal display device 11 of the second display device 7 is in a transmission mode in which the external light L1 is easy to transmits through the liquid crystal display device 11 of the second display device 7 (e.g., in a state where no image is displayed on the liquid crystal element portion 14).

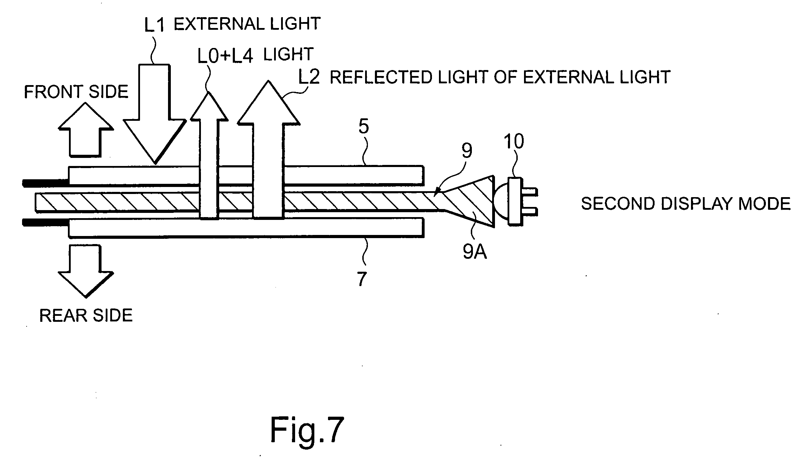

Next, a description will hereinafter be given with respect to an operation (second display mode) in which information is displayed on the first display device 5 (refer to Fig. 2) by utilizing an external light and the illumination light with reference to Fig. 7. The second display mode corresponds to the operation mode of the first display device 5 when an external light L1 comes into the first display device 5 in a place such as the outdoors in the fine weather where the surround is bright.

First of all, in order to obtain the second display mode, the mode of the second display device 7 is changed over to the mirror mode so that the external light L1 entered from the first display device 5 (i.e., transmitting through the first display device 5) is reflected by the display surface 15B (refer to Fig. 4) of the reflection control device 15 of the second display device 7. That is to say, as shown in Fig. 4, in a state where no voltage is applied to the reflection control device 15 of the first display device 5, the reflection control device 15 becomes the perfect transparent state. As a result, the external light L1 entered from the first display device 5 transmits through the first display device 5, the light guide plate 9 and the liquid crystal display device 11 of the second display device 7.

On the other hand, since the mode of the reflection control device 15 of the second display device 7 is changed over to the mirror mode, the above-mentioned external light L1 is reflected in the form of a reflected light component L2 by the display surface 15B (refer to Fig. 4) of the second display device 7. As a result, the reflected light component L2 travels towards the first display device 5 (front side). It should be noted that the display surface 15A of the second display device 7 in the mirror mode becomes the mirror surface to act as the mirror.

In addition, since the operations of the lights L0 and L4 in the light guide plate 19 are the same as those in the first display mode utilizing the illumination light, its detailed description is omitted. Note that, in this second mode, it is supposed that the liquid crystal display device 11 of the second display device 7 is in a transmission mode in which the external light L1 is easy to transmits through the liquid crystal display device 11 of the second display device 7.

Moreover, when the predetermined drive signal S1 is supplied to the electrode portions (not shown) of the liquid crystal element portion 14 of the liquid crystal display device 11 shown in Fig. 4 in the first display device 5, a predetermined image is displayed in dot matrix on the first display device 5. That is to say, in this embodiment, the image displayed on the liquid crystal display device 11 can be visually recognized by utilizing the light L0 and L4 emitted from the light guide plate 9, and the reflected light component L2 reflected by the display surface 15B of the reflection control device 15.

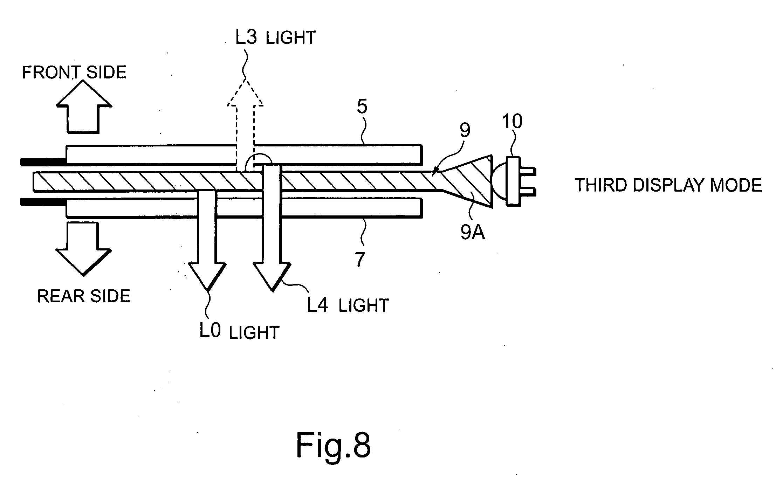

Next, referring to Fig. 8, a description will hereinafter be given with respect to an operation (third display mode) in which information is displayed on the second display device 7 by utilizing the illumination light. In the third display mode, first of all, the light source 10 emits the light in accordance with a control signal from the CPU 21 (refer to Fig. 5). The light emitted from the light source 10 is guided to the light guide plate 9 and the light L0 is then emitted from the light guide plate 9 to the rear side. As a result, the light L0 emitted from the light guide plate 9 is applied to the second display device 7.

In this case, as shown in Fig. 4, when no voltage is applied to the reflection control device 15 of the second display device 7, the reflection control device 15 becomes the perfect transparent state. As a result, the light L0 from the light guide plate 9 transmits through the liquid crystal display device 11 and the reflection control device 15 of the second display device 7.

In addition, the mode of the first display device 5 is changed over to the mirror mode in accordance with a control signal from the CPU 21. As a result, a light L3 emitted from the light guide plate 9 is reflected by the display surface 15B (refer to Fig. 4) of the first display device 5. That is to say, the light L3 from the light guide plate 9 is reflected in the form of a light (reflected light component) L4 by the display surface 15B of the first display device 5 since the mode of the reflection control device 15 of the first display device 5 (refer to Fig. 4) is changed over to the mirror mode. As a result, the reflected light component L4 travels towards the second display device 7 (rear side).

Note that in this reflection state, the light L3 indicated by an arrow expressed with a broken line of Fig. 8 is reflected in the form of the light L4 indicated by an arrow expressed with a solid line. In addition, as shown in Fig. 4, the external light L1 from the rear side is reflected by the display surface 15B (mirror surface) of the reflection control device 15 of the first display device 5 since the first display device 5 is changed in its mode over to the mirror mode to act as the mirror.

Moreover, when the predetermined drive signal S1 is supplied to the electrode portions (not shown) of the liquid crystal element portion 14 of the liquid crystal display device 11 shown in Fig. 4 in the second display device 7, a predetermined image is displayed in dot matrix on the second display device 7. That is to say, in this embodiment, the image displayed on the liquid crystal display device 11 can be visually recognized by utilizing the light L0 emitted from the light guide plate 9, and the reflected light component L4 by the display surface 15B of the reflection control device 15. Note that, in this case, it is supposed that the liquid crystal display device 11 of the second display device 5 is in the transmission mode in which the external light L1 is easy to be transmitted through the liquid crystal display device 11 of the first display device 5.

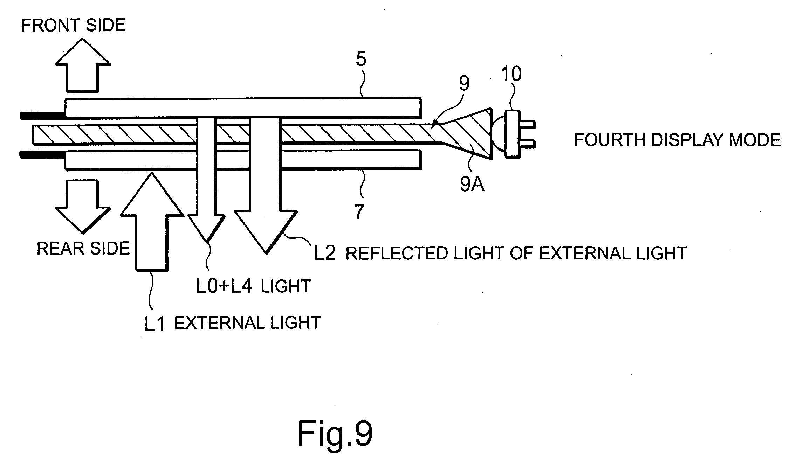

Next, with reference to Fig. 9, a description will hereinafter be given with respect to an operation (fourth display mode) in which information is displayed on the second display device 7 (refer to Fig. 2) by utilizing the external light and the illumination light. The fourth display mode corresponds to the operation mode of the second display device 7 when the external light L1 comes into the second display device 7 in a place such as the outdoors in the fine weather where the circumference is bright.

First, to obtain the fourth display mode, the mode of the first display device 5 is changed over to the mirror mode so that the external light L1 which is entered from the second display device 7 (i.e., transmitting through the second display device 7) is reflected by the display surface 15B (refer to Fig. 4) of the first display device 5. That is to say, as shown in Fig. 4, when no voltage is applied to the reflection control device 15 of the second display device 7, the reflection control device 15 is in the perfect transmission state. As a result, the external light L1 entered from the second display device 7 transmits through the second display device 7, the light guide plate 9, and the liquid crystal display device 11 of the first display device 5.

On the other hand, the external light L1 is reflected in the form of a reflected light component L2 by the display surface 15B of the first display device 5 since the mode of the reflection control device 15 of the first display device 5 is changed over to the mirror mode. As a result, the reflected light component L2 travels towards the second display device 5 (rear side). Note that the display surface 15A (refer to Fig. 4) of the first display device 5 in the mirror mode becomes the mirror surface to act as the mirror.

In addition, since operations of lights L0 to L4 in the light guide plate 19 are the same as those in the third display mode utilizing the illumination light, its detailed description is omitted. In this case, it is supposed that the liquid crystal display device 11 of the first display device 5 is in the transmission mode in which the external light L1 is easy to transmits therethrough.

Moreover, when the predetermined drive signal S1 is supplied to the electrode portions (not shown) of the liquid crystal element portion 14 of the liquid crystal display device 11 (shown in Fig. 4) in the second display device 5, a predetermined image is displayed in dot matrix on the second display device 5. That is to say, in this embodiment, the image displayed on the liquid crystal display device 11 can be visually recognized by utilizing the light L0 and L4 emitted from the light guide plate 9, and the reflected light component L2 by the display surface 15B (refer to Fig. 4) of the reflection control device 15. Note that in this embodiment, the mode of both the first and second display devices 5 and 7 may also be changed over to the mirror mode or the display mode.

According to this embodiment, since the display system includes the first and second display devices 5 and 7 each of which is adapted to become the high reflectivity state depending on the presence or absence of application of the voltage, the mode of one display device 5(7) can be changed over to the mirror mode, and the mode of the other display device 7 (5) can be changed over to the display mode.

That is to say, in this embodiment, it is unnecessary to provide the reflection member (corresponding to the concept of including the reflecting layer and the like as disclosed in the related art example shown in Fig. 11 or in Japanese Utility Model for Registration 3,094,091 and JP 2002-98963 A) in the single light guide plate 9 disposed between the first and second display devices 5 and 7 . Here, the loss of the light transmitting through the first and second display devices 5 and 7 is reduced, and thus the power saving can be realized.

In this embodiment, when predetermined information is displayed on the first or second display device 5 or 7 by utilizing at least one of the external light and the illumination light, the mode of one display device 5 (7) is changed over to the mirror mode, and the mode of the other display device 7 (5) is changed over to the display mode. That is to say, according to this embodiment, the display device 5(7) efficiently reflects the external light or the illumination light, and the resultant reflected light is applied to the other display device 7(5), so that the visibility is enhanced.

According to this embodiment, when for example, single light emission means (including the light guide plate 9 and the light source 10) is provided between the first and second display devices 5 and 7, the light emission means for guiding the light to the first and second display devices 5 and 7 is common to the first and second display devices 5 and 7. Thus, the display system S and the electronic equipment such as the mobile telephone 1 can be thinned and miniaturized.

In addition, according to this embodiment, with the above-mentioned structure, the structure of the light emission means (including the light guide plate 9 and the light source 10) in the display system S can be simplified, and also the power saving of the display system S can be realized.

This embodiment shows the example in which the switching between the first and second display devices 5 and 7 is carried out in accordance with the control signal from the CPU 21 as the control means. Alternatively, as a modification, the switching between the first and second display devices 5 and 7 may be carried out in accordance with a detection signal from the chassis open/close detection switch 24. That is to say, the above-mentioned switching processing is executed in conjunction with the open/close (rotation) operation of the first and second chassis 3 and 2 to thereby allow the first and second display devices 5 and 7 in the display system S to be switched over to each other in correspondence to a type of the mobile telephone 1.

For example, in a state where the mobile telephone 1 is opened as shown in Fig. 1, or in a state where the power supply is turned ON, the mode of the first display device 5 may be changed over to the display mode, and the mode of the second display device 7 may be changed over to the mirror mode. On the other hand, in a state where the mobile telephone 1 is closed (refer to the imaginary line of Fig. 2), or in a state where the power supply is turned OFF, the mode of the first display device 5 may be changed over to the mirror mode, and the mode of the second display device 7 may be changed over to the display mode. Moreover, in this embodiment, the change-over between the mirror mode and the display mode may be carried out by operating the operation means (including the ten key).

Note that, this embodiment shows the mobile telephone 1 of the folding type in which the hinge 4 through which the first and second chassis 3 and 2 is rotated only in one direction. Alternatively, as a modification, there may also be adopted a mobile telephone of a universal type using a universal hinge which is adapted to be rotated in two or more directions. In addition, this embodiment may also be applied to an example of a mobile telephone of a type other than the mobile telephone of the type in which a pair of chassis is adapted to be opened and closed around the hinge or the like as a center, and a pair of chassis is connected through the hinge, e.g., a mobile telephone of a type in which a single chassis is provided with a display device and an input unit.

In this embodiment, since the first display device 5 has the same size as that of the second display device 7, the light L0 from the light guide plate 9 and the reflected light L2 of the external light can be nearly uniformly applied up to the periphery of the first and second display devices 5 and 7. That is to say, in this embodiment, since the above-mentioned lights L0 and L2 are nearly uniformly applied up to the peripheries of the first and second display devices 5 and 7, the lights L0 and L2 can be effectively utilized. Note that, as a modification, any one of the first and second display devices 5 and 7 may be miniaturized.

In addition, this embodiment shows the example in which the first display device 5, the light guide plate 9, and the second display device 7 are disposed close to one another. Alternatively, the display system S may also be structured so that the first display device 5, the light guide plate 9, and the second display device 7 are joined (stuck) to one another.

### Second Embodiment

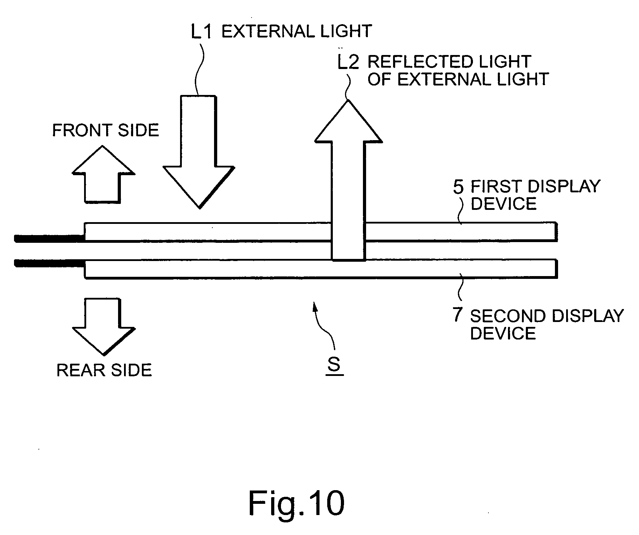

Fig. 10 shows a second embodiment of the present invention. The display system S of this embodiment is an example of a display systemof a reflection type. For this reason, inthis embodiment, unlike the display system S (refer to Fig. 5) of the first embodiment, no light guide plate is disposed. Note that, Fig. 10 is a view schematically showing a structure of the display system S.

The display system S of this embodiment includes first and second display devices 5 and 7. Then, the first and second display devices 5 and 7 are disposed so as for their back surfaces to face each other (so as to be close to each other) with a predetermined distance therebetween. Similarly to the first embodiment, the mode of each of the first and second display devices 5 and 7 can be changed over to the display mode in which information is displayed on corresponding one of the first and second display devices 5 and 7, or the mirror mode in which a reflectivity of corresponding one of the first and second display devices 5 and 7 is high depending on presence or absence of application of the voltage.

That is to say, as shown in Fig. 4, each of the first and second display devices 5 and 7 has a structure in which the liquid crystal display device 11 and the reflection control device 15 are combined integrally with each other. Since other constituent elements are the same in structure as those in the first embodiment, detailed descriptions their of are omitted. Note that, in this embodiment, the first and second display devices 5 and 7 may also be joined (stuck) to each other.

Here, in order to change the mode of the first display device 5 over to the display mode, first of all, the mode of the second display device 7 is changed over to the mirror mode so that the external light L1 which is entered from the first display device 5 (which transmits through the first display device 5) is reflected by the display surface 15B (refer to Fig. 4) of the second display device 7. Concurrently with this processing, the mode of the first display device 5 is changed over to the display mode in which an image is displayed on the first display device 5.

In this case, as shown in Fig. 4, when no voltage is applied to the reflection control device 15 of the first display device 5, the reflection control device 15 of the first display device 5 is in the perfect transparent state. As a result, the external light L1 entered from the first display device 5 transmits through the liquid crystal display device 11 of the first display device 5, the gap between the first and second display devices 5 and 7, and the liquid crystal display device 11 of the second display device 7.

On the other hand, the external light L1 is reflected in the form of a reflected light component L2 by the display surface 15B of the second display device 7 since the mode of the reflection control device 15 of the second display device 7 is changed over to the mirror mode (by applying the suitable voltage to the reflection control device 15 of the second display device 7). As a result, the reflected light component L2 travels towards the first display device 5 side (front side).

In addition, when the predetermined drive signal S1 is supplied to the electrode portions (not shown) of the liquid crystal element portion 14 of the liquid crystal display device 11 (shown in Fig. 4) in the first display device 5, a predetermined image is displayed in dot matrix on the first display device 5. That is to say, in this embodiment, since the external light L1 entered from the first display device 5 is reflected in the form of the reflected light component L2 by the display surface 15B of the second display device 7, an image displayed on the liquid crystal display device 11 of the first display device 5 can be visually recognized.

Note that, in the above-mentioned case, it is supposed that the liquid crystal display device 11 of the second display device 7 is in the transmission mode in which the external light L1 is easy to be transmitted through the liquid crystal display device 11 of the second display device 7 (e.g., in a state where no image is displayed on the liquid crystal element portion 14 of the liquid crystal display device 11 of the second display device 7).

On the other hand, when the mode of the second display device 7 is changed over to the display mode, the reverse processing of the above-mentioned processing has only to be executed. Hence, detailed description thereof is omitted.

In this embodiment, the liquid crystal (i.e., the first and second display devices 5 and 7) can be irradiated with the reflected light L2 of the external light L1. As a result, the lighting device (including the light guide plate 9 and the light source 10 for example shown in Fig. 5) can be made unnecessary, and hence the power saving can be further promoted. In addition, in this embodiment, since the lighting device can be made unnecessary as described above, this embodiment contributes to that the display system S is further thinned. Since other operations and effects are the same as those of the first embodiment, their detailed descriptions are omitted here for the sake of simplicity.

Note that in the case where the display devices are provided on the front side and the rear side of the chassis, respectively, as described in the display device disclosed in Japanese Utility Model for Registration 3, 094, 091 and the liquid crystal display device disclosed in JP 2002-98963 A, it is necessary to provide a pair of light guide plates. In this embodiment, however, even in the case where the first and second display devices 5 and 7 are provided on the front side and the rear side of the chassis 2, respectively, it is unnecessary to provide the light guide plates and the light sources for the first and second display devices 5 and 7, respectively. As a result, this embodiment can contribute to the thinning and the low-cost promotion.

It should be noted that a surface illumination system constituted by feeder lead lines, a plane type lamp and the like may also be adopted for the light emission means (including the light guide plate and the light sources) of this embodiment. In addition, as for a combination pattern in the present invention, for example, there may be adopted a pattern of combination of two examples, or two or more examples of the first and second embodiments or their modifications.

Moreover, the electronic equipment according to the present invention has a concept of including an apparatus in which the display system S as shown in the first and second embodiments needs to be provided, e.g., a mobile telephone, a personal computer, a personal digital assistants (PDA) or the like.

## Claims

1. A display system (S), **characterized by** comprising:
a first display device (5) provided on one surface side of the chassis (2); and
a second display device (7) provided so as to face a rear of the first display device, and
a reflection control device (15) formed with each of the first and second display devices (5) and (7) and changing a state of a high reflectivity depending on presence or absence of a voltage supplied to the reflection control device(15).

2. The display system (S) according to claim 1, further comprising:
a voltage supplying circuit (20) which supplies the voltage for changing a state of the reflection control device (15) over to a state where an image is displayed or the state where the reflection control device (15) has a high reflectivity.

3. The display system (S) according to claim 1 or 2, further comprising:
light emission means (9 and 10) provided between the first and second display devices (5 and 7).

4. The display system (S) according to claim 1, 2 or 3, further comprising:
a single light guide plate (9) disposed between the first and second display devices (5) and (7); and
a light source (10) for supplying a light to the light guide plate.

5. The display system (S) according to claim 1, 2, 3 or 4, wherein when the reflection control device (15) of one of the first and second display devices (5 and 7) is set to a state where an image is displayed thereon, a state of the reflection control device (15) of the other one of the first and second display devices (5 and 7) is changed over to the state where the reflection control device (15) of the one of the first and second display devices (5 and 7) has a high reflectivity.

6. The display system (S) according to claim 1, 2, 3, 4 or 5, wherein when a power supply (23) is turned ON, the reflection control device (15) of at least one of the first and second display devices (5 and 7) becomes a state where an image is displayed thereon, and when the power supply (23) is turned OFF, a state of the reflection control device (15) of the at least one of the first and second display devices (5 and 7) is changed over to the state where the reflection control device (15) of the at least one of the first and second display devices (5 and 7) has a high reflectivity.

7. The system (S) according to any one of claims 1 to 6, wherein the reflection control device comprises a semitransparent mirror disposed on a side of a surface of the first or second display device (5 or 7) to which an external light entered, and connected to the voltage supplying circuit (20), and the semitransparent mirror becomes a state of transmitting a light from the semitransparent mirror, or a state of reflecting a light from the semitransparent mirror depending on presence or absence of application of a voltage fromthe voltage supplying circuit (20).

8. The system (S) according to any one of claims 1 to 7, wherein the reflection control devices (15) of the first and second display devices (5 and 7) have the same size.

9. An electronic equipment (1) having a chassis (2) and a display system (S) disposed in the chassis (7),
**characterized in that** the display system (S), **characterized by** comprising:
a first display device (5) provided on one surface side of the chassis (2); and
a second display device (7) provided so as to face a rear of the first display device, and
a reflection control device (15) formed with each of the first and second display devices (5) and (7) and changing a state of a high reflectivity depending on presence or absence of a voltage supplied to the reflection control device(15).

10. The electronic equipment (1) according to claim 9, further comprising:
a voltage supplying circuit (20) which supplies the voltage for changing a state of the ref lection control device (15) over to a state where an image is displayed or the state where the reflection control device (15) has a high reflectivity.

11. The electronic equipment (1) according to claim 9 or 10, further comprising:
light emission means (9 and 10) provided between the first and second display devices (5 and 7).

12. The equipment (1) according to claim 9, 10 or 11, wherein when the reflection control device (15) of one of the first and second display devices (5 and 7) is set to a state where an image is displayed thereon, a state of the reflection control device (15) of the other one of the first and second display devices (5 and 7) is changed over to the state where the reflection control device (15) of the one of the first and second display devices (5 and 7) has a high reflectivity.

13. The equipment (1) according to claim 9, 10, 11 or 12, wherein when a power supply (23) is turned ON, the reflection control device (15) of at least one of the first and second display devices (5 and 7) becomes a state where an image is displayed thereon, and when the power supply (23) is turned OFF, a state of the reflection control device (15) of the at least one of the first and second display devices (5 and 7) is changed over to the state where the reflection control device (15) of the at least one of the first and second display devices (5 and 7) has a high reflectivity.

14. The equipment (1) according to any one of claims 9 to 13, wherein the reflection control devices (15) of the first and second display devices (5 and 7) have the same size.

15. The equipment (1) according to any one of claims 9 to 14, wherein the reflection control device comprises a semitransparent mirror disposed on a side of a surface of the first or second display device (5 or 7) to which an external light entered, and connected to the voltage supplying circuit (20), and the semitransparent mirror becomes a state of transmitting a light from the semitransparent mirror, or a state of reflecting a light from the semitransparent mirror depending on presence or absence of application of a voltage fromthe voltage supplying circuit (20).

16. An electronic equipment (1) capable of opening/closing, **characterized by** comprising:
a first chassis (3) including input means (22); and
a second chassis (2) mounted to the first chassis (3) through open/close means (4),
the electronic equipment, **characterized by** comprising:
a first display device (5) provided on one surface side of the second chassis (2); and
a second display device (7) provided so as to face a rear of the first display device (5), and
a reflection control device (15) formed with each of the first and second display devices (5) and (7) and changing a state of a high reflectivity depending on presence or absence of a voltage supplied to the reflection control device(15).

17. The electronic equipment (1) according to claim 16, further comprising:
control means (21) for changing a state of the reflection control device (15) of at least one of the first and second display devices (5 and 7) over to a state where an image is displayed, or the state where the reflection control device (15) has a high reflectivity in accordance with open/close operation of the first and second chassis (3 and 2).

18. The electronic equipment (1) according to claim 16 or 17, further comprising:
open/close detection means (24) for detecting open/close operation of the first and second chassis (3 and 2).

19. The equipment (1) according to claim 16, 17 or 18, wherein in a case where the first and second chassis (3 and 2) are closed, a state of the reflection control device (15) of the first display device (5) is made the state where the reflection control device (15) has a high reflectivity, and a state of the reflection control device (15) of the second display device (7) is made a state where an image is displayed, and
in a state where the first and second chassis (3 and 2) are opened, a state of the reflection control device (15) of the first display device (5) is made the state where an image is displayed, and a state of the reflection control device (15) of the second display device (7) is made the state where the reflection control device (15) has a high reflectivity.

20. The electronic equipment (1) according to claim 16, 17, 18 or 19,wherein the reflection control device comprises a semitransparent mirror disposed on a side of a surface of the first or second display device (5 or 7) to which an external light entered, and connected to the voltage supplying circuit (20), and the semitransparent mirror becomes a state of transmitting a light from the semitransparent mirror, or a state of reflecting a light from the semitransparent mirror depending on presence or absence of application of a voltage from the voltage supplying circuit (20).
